# EUROPEAN PATENT APPLICATION

(11) **EP 4 822 447 A1**
(43) Date of publication of application: **14.10.2026**
(21) Application number: 26170380.5
(22) Date of filing: 02.04.2026
(51) Int. Cl.: G03G 21/16

(54) **IMAGE FORMING APPARATUS**

(30) Priority: 07.04.2025 JP 2025062864
(71) Applicant: Sharp Kabushiki Kaisha, Sakai City, Osaka 590-8522 (JP)
(72) Inventor: AOKI, Reishi, Osaka, 590-8522 (JP); OGASAWARA, Hironori, Osaka, 590-8522 (JP); YAMANAKA, Hisashi, Osaka, 590-8522 (JP)
(74) Representative: Müller Hoffmann & Partner

(57) **Abstract**

An image forming apparatus includes a first housing and a second housing integrally connected to each other in a vertical direction with the second housing located below the first housing. An opening that opens into a space provided between a bottom of the first housing and the second housing is provided in a side of the second housing, at the bottom of the first housing, a grip inhibitor is provided in a portion facing the space, the grip inhibitor includes an inclined portion that is inclined downward from a side surface side of the second housing in which the opening is provided toward an inside of the space and a horizontal portion connected to the inclined portion.

## Description

### CROSS-REFERENCE TO RELATED APPLICATION

The present application claims priority from Japanese Application JP2025-062864, the content of which is hereby incorporated by reference into this application.

### BACKGROUND OF THE INVENTION

### 1. Field of the Invention

The disclosure relates to an image forming apparatus.

### 2. Description of the Related Art

In an image forming apparatus such as a copying machine or a printer, various configurations for lifting and moving the apparatus have been proposed. For example, a configuration in which a hole for a handle is provided in an openable and closable portion of an apparatus side, a configuration in which an elongated grip that can be accommodated in an apparatus main body is provided, and the like have been proposed. However, when a configuration for lifting the image forming apparatus is provided, the configuration is conspicuous, and thus an appearance quality may be deteriorated. Thus, JP 2013-231816 A proposes a method for suppressing deterioration of the appearance quality.

### SUMMARY

A known image forming apparatus includes an image former that forms an image on a recording medium, an image scanner that is installed above the image former and reads an image of a document, a pair of front and rear plate-like members that are disposed to face each other, a frame that includes a beam that connects the pair of plate-like members and supports the image scanner from below and in which the image former is accommodated, and a cover that includes an opening whose upper edge portion is supported by the beam and covers at least a part of the frame.

In the image forming apparatus described above, the upper edge portion of the opening provided in the side is used as a handle when the image forming apparatus is lifted. In the known structure, when the image forming apparatus is lifted and moved, and the beam above the opening is grasped and lifted, there is no problem, but when a bottom of the image scanner is lifted by inserting a hand from an open portion on a front side of a document discharge surface, a local load is applied to the image scanner, and distortion may occur in a housing.

An aspect of the disclosure has been made to solve the above-described problem, and an object of the disclosure is to provide an image forming apparatus that can avoid an occurrence of distortion in the housing by an unintended part being lifted.

An image forming apparatus according to one aspect of the disclosure includes a first housing and a second housing integrally connected to each other in a vertical direction with the second housing located below the first housing. An opening that opens into a space provided between a bottom of the first housing and the second housing is provided in a side of the second housing. At the bottom of the first housing, a grip inhibitor is provided in a portion facing the space. The grip inhibitor includes an inclined portion that is inclined downward from a side surface side of the second housing in which the opening is provided toward an inside of the space and a horizontal portion connected to the inclined portion.

The image forming apparatus according to the aspect of the disclosure may be configured such that the second housing includes an openable and closable door openably and closably attached to the second housing and that the openable and closable door forms the space and the opening that opens into the space in a closed state and includes a door handle in which a handle that opens and closes the openable and closable door is formed at a position of the opening facing the grip inhibitor.

The image forming apparatus according to the aspect of the disclosure may be configured such that a length of the inclined portion in a direction from the opening side toward the inside of the space is longer than a length of the horizontal portion.

The image forming apparatus according to the aspect of the disclosure may be configured such that the grip inhibitor includes a plurality of ribs arranged side by side.

The image forming apparatus according to the aspect of the disclosure may be configured such that the first housing includes an image scanner that reads an image from a document and that the second housing includes an image former that forms an image on a sheet.

An image forming apparatus according to an aspect of the disclosure is an image forming apparatus that includes a first housing and a second housing integrally connected to each other in a vertical direction with the second housing located below the first housing. An opening that opens into a space provided between a bottom of the first housing and the second housing is provided in a side of the second housing. The second housing includes an image former that forms an image on a sheet. A discharge tray on which the sheet discharged from the second housing after the image is formed thereon by the image former is stacked is provided in the space. At the bottom of the first housing, the grip inhibitor is provided on the opening side of a portion facing the space.

The image forming apparatus according to the aspect of the disclosure may be configured such that the first housing includes an image scanner that reads an image from a document.

The image forming apparatus according to the aspect of the disclosure may be configured such that the second housing is provided with an apparatus gripper to be gripped by a user.

In an aspect of the disclosure, even with a space below the first housing, the grip inhibitor including the inclined portion is provided, making it difficult to put a hand on the bottom of the first housing. Thus, when the image forming apparatus is lifted by putting a hand on the bottom of the first housing, the weight of the entire image forming apparatus is applied to the first housing, and distortion of the first housing can be avoided.

### BRIEF DESCRIPTION OF THE DRAWINGS

FIG. 1 is a schematic cross-sectional view illustrating a configuration of an image forming apparatus according to a first embodiment of the disclosure.
FIG. 2 is a perspective view of an external appearance illustrating the image forming apparatus according to the first embodiment of the disclosure as viewed from a front side.
FIG. 3 is a perspective view of an external appearance illustrating the image forming apparatus with an openable and closable door closed as viewed from a rear side.
FIG. 4 is a perspective view of an external appearance illustrating the image forming apparatus with an openable and closable door opened as viewed from a rear side.
FIG. 5 is a perspective view of an external appearance illustrating an image reader as viewed from below.
FIG. 6 is a perspective view of an external appearance of an openable and closable door.
FIG. 7 is an enlarged cross-sectional view illustrating the vicinity of a rear side facing portion and a door handle.
FIG. 8 is an enlarged cross-sectional view illustrating the vicinity of the rear side facing portion.
FIG. 9 is a perspective view of an external appearance illustrating an image reader in a second embodiment of the disclosure as viewed from below.
FIG. 10 is an enlarged perspective view illustrating the vicinity of the rear side facing portion.

### DETAILED DESCRIPTION OF THE INVENTION

### First Embodiment

An image forming apparatus according to a first embodiment of the disclosure will be described below with reference to the accompanying drawings.

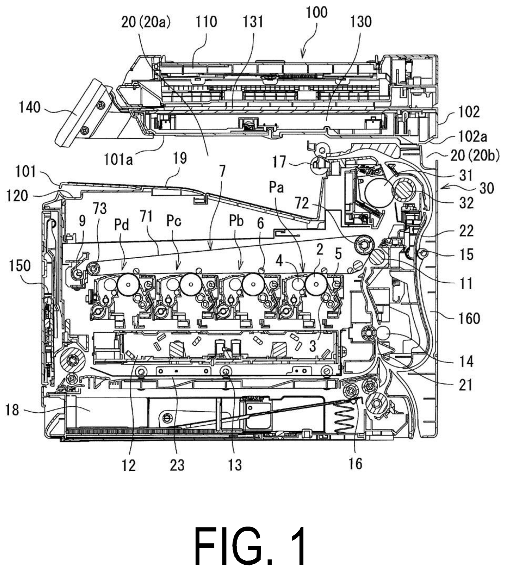

FIG. 1 is a schematic cross-sectional view illustrating a configuration of the image forming apparatus according to the first embodiment of the disclosure.

An image forming apparatus 100 is a multi-function printer that has a copy function, a scanner function, a facsimile function, and a printer function. The image forming apparatus 100 transmits an image of a document read by an image reader 130 (corresponding to a first housing) to an external device, or forms an image of a document read by the image reader 130 or an image received from the external device, on a recording medium such as a sheet in color or monochrome at a printing housing 120 (corresponding to a second housing).

A document feeding device 110 openably and closably supported is provided on the upper side of the image reader 130. The document feeding device 110 feeds one document or a plurality of documents one by one sequentially. The image reader 130 generates image data by allowing a scanning optical system to scan a document placed on a document table 131 to read the document, or by reading a document fed by the document feeding device 110.

The printing housing 120 is disposed below the image reader 130, and the image reader 130 and the printing housing 120 are integrally connected to each other. That is, the image forming apparatus 100 includes the image reader 130 and the printing housing 120, and the image reader 130 and the printing housing 120 are integrally connected to each other in the vertical direction with the printing housing 120 located below the image reader 130. The printing housing 120 is provided with the image former including a fixing device, a photoreceptor drum 2, a charger 3, an optical scanning device 12, a development device 4, a drum cleaning device 5, an intermediate transfer belt device 7, a secondary transfer roller 11, a fixing device 30, and a feeder 18.

The image forming apparatus 100 handles image data corresponding to a color image composed of the colors black (K), cyan (C), magenta (M), and yellow (Y), or a monochrome image composed of a single color (for example, black). The image forming apparatus 100 is provided with four of the photoreceptor drums 2, four of the chargers 3, four of the development devices 4, and four of the drum cleaning devices 5 to form four types of toner images and respectively serve as four image stations Pa, Pb, Pc, Pd corresponding to the colors black, cyan, magenta, and yellow, respectively.

The photoreceptor drum 2 includes a photosensitive layer formed on a surface of a grounded rotatable metal drum, exhibiting insulation in a dark place, and changing to be conductive in a region irradiated with light. The charger 3 charges the surface of the photoreceptor drum 2 to a predetermined potential. The optical scanning device 12 exposes the surface of the photoreceptor drum 2 charged to the predetermined potential according to the image data to be printed to form an electrostatic latent image. The development device 4 supplies toner to the electrostatic latent image on the surface of the photoreceptor drum 2 to form a toner image on the surface of the photoreceptor drum 2. The drum cleaning device 5 removes and collects residual toner that remains on the surface of the photoreceptor drum 2 after transferring the toner image to an intermediate transfer belt 71 to be described later. The surface of the photoreceptor drum 2 cleaned by the drum cleaning device 5 is charged again by the charger 3 and toner image formation continues. With such a sequence of operations, a toner image of each color is formed on the surface of each photoreceptor drum 2.

The intermediate transfer belt device 7 includes intermediate transfer rollers 6, an endless intermediate transfer belt 71, an intermediate transfer driving roller 72, an intermediate transfer driven roller 73, and a cleaning device 9. Four of the intermediate transfer rollers 6 are provided on the inner side of the intermediate transfer belt 71 to form the four types of toner images corresponding to the respective colors. The intermediate transfer rollers 6 transfer the toner images of the respective colors formed on the surfaces of the photoreceptor drums 2 to the intermediate transfer belt 71 that is moving in a circularly rotating manner.

The intermediate transfer belt 71 is stretched over the intermediate transfer driving roller 72 and the intermediate transfer driven roller 73. In the image forming apparatus 100, the toner images of the respective colors formed on the surfaces of the respective photoreceptor drums 2 are sequentially transferred and superimposed to form color toner images on the surface of the intermediate transfer belt 71. The cleaning device 9 removes and collects waste toner that remains on the surface of the intermediate transfer belt 71 without being transferred to the sheet by the secondary transfer roller 11 to be described later.

The secondary transfer roller 11 is configured such that the sheet conveyed through a sheet conveying path 21 is conveyed while being nipped at a transfer nip portion that is an abutment portion against the intermediate transfer belt 71. When the sheet passes through the transfer nip portion, the toner image on the surface of the intermediate transfer belt 71 is transferred onto the sheet, and the sheet is conveyed to the fixing device.

The fixing device includes a fixing roller 31 and a pressure roller 32 that rotate around an axis. The fixing device is configured such that the sheet with the transferred toner image is nipped by a nip portion between the fixing roller 31 and the pressure roller 32 and subjected to heat and pressure, and thus the toner image is fixed onto the sheet.

The feeder 18 is provided with a feed cassette in which recording media (sheets) to be used for image formation are stacked, and is disposed below the optical scanning device 12. The sheet is pulled out from the feeder 18 by pickup rollers 16 and conveyed to the sheet conveying path 21. The sheet conveyed to the sheet conveying path 21 is discharged to a discharge tray 19 by discharge rollers 17 via the secondary transfer roller 11 and the fixing device.

Registration rollers 14 and the discharge rollers 17 are disposed along the sheet conveying path 21. The registration rollers 14 convey the sheet at a speed equal to a process speed at which an image is formed on the sheet. The registration rollers 14 are provided between the feeder 18 and the secondary transfer roller 11, and adjust a conveyance timing of the sheet so that the toner image is transferred to the sheet by the secondary transfer roller 11. For example, the registration rollers 14 allow the conveyed sheet to wait (temporarily stop) while being nipped, and start conveying the sheet at a constant speed in synchronization with the secondary transfer roller 11.

When images are formed on not only the front surface but also the back surface of the sheet, a conveying direction of the sheet is changed by the discharge rollers 17, and the sheet is conveyed to a reverse conveying path 22. In the reverse conveying path 22, the front and back of the sheet are reversed by reverse conveying rollers 15, and the sheet is guided in the reversed state to the registration rollers 14. The image forming apparatus 100 forms the image on the back surface of the sheet guided to the registration rollers 14 in the same manner as the front surface of the sheet, and then discharges the sheet to the discharge tray 19.

A bypass tray 150 is openably and closably attached to a front (apparatus front 101) of the image forming apparatus 100 (specifically, the printing housing 120). The sheets stacked on the opened bypass tray 150 are supplied to a manual feed path 23. The manual feed path 23 merges at a location just before the registration rollers 14 with the sheet conveying path 21, and the sheet is conveyed to the registration rollers 14 by a conveying roller 13 disposed in the manual feed path 23.

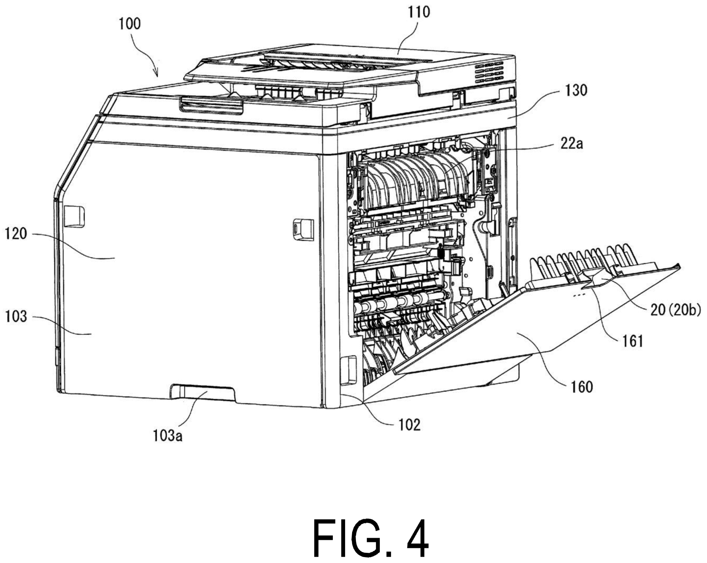

An openable and closable door 160 is openably and closably attached to a rear (apparatus rear 102) of the image forming apparatus 100 (particularly, the printing housing 120). When the openable and closable door 160 is opened, a part of the sheet conveying path 21 is exposed, and a jammed sheet or the like can be collected. Note that the state in which the openable and closable door 160 is opened is illustrated in FIG. 4 to be described later.

The image forming apparatus 100 has a configuration in which the printing housing 120 including the image former and the image reader 130 are integrally connected to each other in the vertical direction with the printing housing 120 located below the image reader 130. In the present embodiment, the image reader 130 corresponds to the first housing, and the printing housing 120 corresponds to the second housing. The disclosure is not limited to this, a plurality of the housings may further be stacked, and two housings arranged vertically adjacent to each other may correspond to the first housing and the second housing.

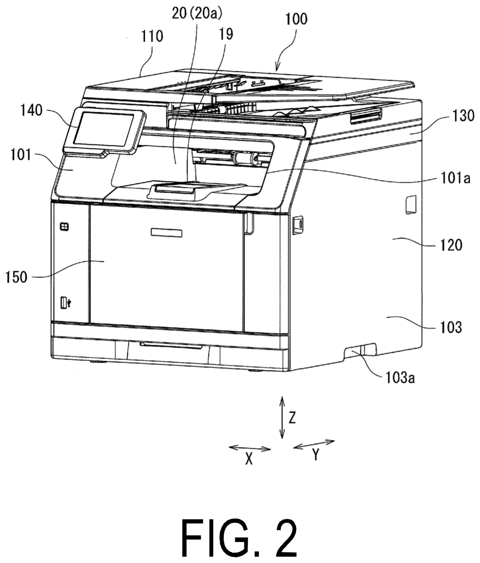

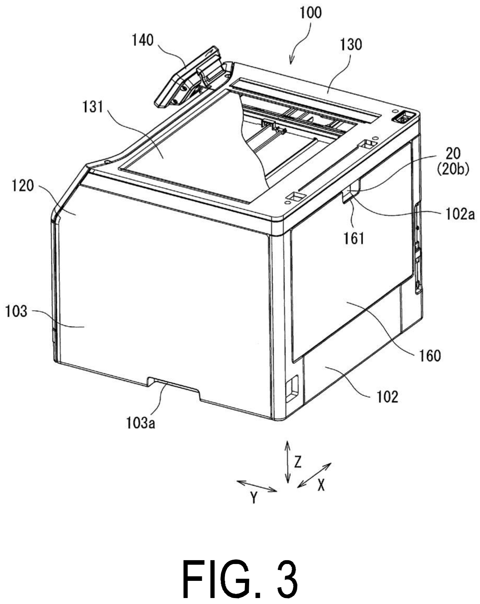

FIG. 2 is a perspective view of an external appearance illustrating the image forming apparatus according to the first embodiment of the disclosure as viewed from a front side, FIG. 3 is a perspective view of an external appearance illustrating the image forming apparatus with an openable and closable door closed as viewed from a rear side, and FIG. 4 is a perspective view of an external appearance illustrating the image forming apparatus with an openable and closable door opened as viewed from a rear side. Note that FIG. 3 illustrates a state in which the document feeding device 110 is removed.

In the disclosure, for the sake of description, regarding directions in the housing of the image forming apparatus 100, a horizontal direction along the apparatus front 101 may be referred to as a width direction X, a direction in which the apparatus front 101 and the apparatus rear 102 face each other may be referred to as a depth direction Y, and a direction in which the printing housing 120 and the image reader 130 are stacked may be referred to as a height direction Z (see FIG. 2).

An opening that opens into a space 20 provided between the image reader 130 and the printing housing 120 is provided on a side of the printing housing 120. Hereinafter, for the sake of description, for the space 20 provided between the image reader 130 and the printing housing 120, a space provided on the apparatus front 101 side may be referred to as a front side space 20a, a space provided on the apparatus rear 102 side may be referred to as a rear side space 20b, and they may be distinguished from each other.

To be more specific, the front side space 20a in which the sheet printed by the printing housing 120 is accommodated is provided on a lower side of the bottom of the image reader 130, and a front side opening 101a that opens into the front side space 20a is provided on the apparatus front 101 of the printing housing 120 in order to take out the sheet accommodated in the front side space 20a. A discharge tray 19, on which printed sheet is discharged and stacked, is provided at the bottom of the front side space 20a so as to extend from the lower edge of the front side opening 101a to the back.

As described above, the discharge tray 19 is provided in the front side space 20a between the bottom (of a front end side) of the image reader 130 and the printing housing 120. In other words, the front side opening 101a is provided at the center portion in the width direction X on the apparatus front 101 side below the image reader 130, the front side space 20a having a recessed portion that is recessed from the front side opening 101a toward the apparatus rear 102 side is provided, and the lower surface of the recessed portion serves as the discharge tray 19. As described above, the discharge tray 19 is provided in a body into which a hand can be inserted through the front side opening 101a, and thus the sheets stacked on the discharge tray 19 can be easily collected.

A display 140 including a liquid crystal display or the like is attached to the apparatus front 101. The display 140 displays a variety of information related to the image forming apparatus 100 and receives input from a user.

As illustrated in FIGS. 3 and 4, the openable and closable door 160 is provided on the apparatus rear 102 of the printing housing 120. The openable and closable door 160 is pivotally supported by the printing housing 120 near an end portion on the lower side, and is attached so as to be openable/closable (movable) between an open position where the inside of the printing housing 120 is exposed and a closed position where the inside of the printing housing 120 is closed by being rotated about a pivotally supported portion. In other words, the printing housing 120 includes the openable and closable door 160 openably and closably attached to the printing housing 120. As illustrated in FIG. 4, when the openable and closable door 160 is opened, a part of the sheet conveying path 21 is exposed. Thus, even when the sheet stops in the sheet conveying path 21 for some reason, the sheet stopped in the sheet conveying path 21 can be easily removed by opening the openable and closable door 160.

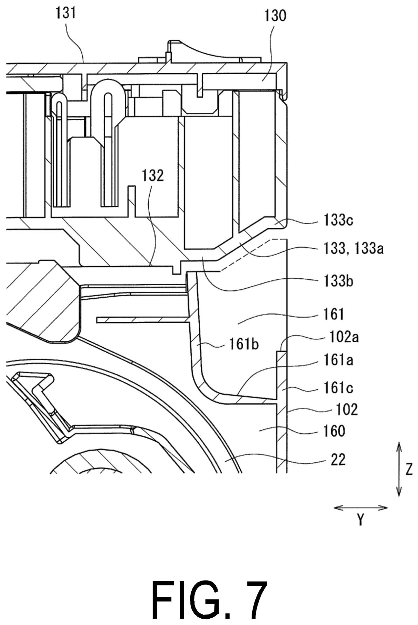

A door handle 161 to be gripped by a user when the openable and closable door 160 is opened and closed is provided at an upper end portion of the openable and closable door 160, the upper end portion being an end portion on the image reader 130 side. As will be described in detail later, the door handle 161 includes the rear side space 20b having a recessed shape from the apparatus rear 102 side toward the apparatus front 101 side and a rear side opening 102a. The rear side space 20b is the space 20 provided between the bottom of the image reader 130 and the printing housing 120, and the rear side opening 102a is the opening that opens into the space 20, in a state where the openable and closable door 160 is closed. Note that a detailed structure of the door handle 161 will be described with reference to FIG. 7 described later.

An apparatus gripper 103a to be gripped by the user is provided on a side (apparatus side 103) of the sides of the printing housing 120, the side being different from the apparatus front 101 and the apparatus rear 102. The apparatus gripper 103a is provided at a lower end portion of the apparatus side 103, is a recessed portion that is recessed inward, and is gripped by the user inserting a hand, and thereby the image reader 130 can be lifted together with the printing housing 120. As described above, by separately providing the apparatus gripper 103a in the printing housing 120, it can be guided to lift the entire image forming apparatus 100.

However, as described above, the space 20 (the front side space 20a and the rear side space 20b) into which the user can insert a hand through the opening (particularly, the rear side opening 102a) is provided between the bottom of the image reader 130 and the printing housing 120 (a joint), and thus it is assumed that the user inserts a hand into the opening and lifts the image forming apparatus 100 without using the apparatus gripper 103a separately provided. In this case, the weight of the entire image forming apparatus 100 may be applied as a concentrated load to the bottom of the image reader 130, and the image reader 130 itself may be deformed. Once the image reader 130 is deformed, the generated distortion may affect the optical performance, and the document may not be read correctly.

Thus, in the present embodiment, the grip inhibitor is provided at the bottom of the image reader 130 to inhibit the user's grip, and the image reader 130 is avoided to be lifted by being put a hand on the bottom of the image reader 130.

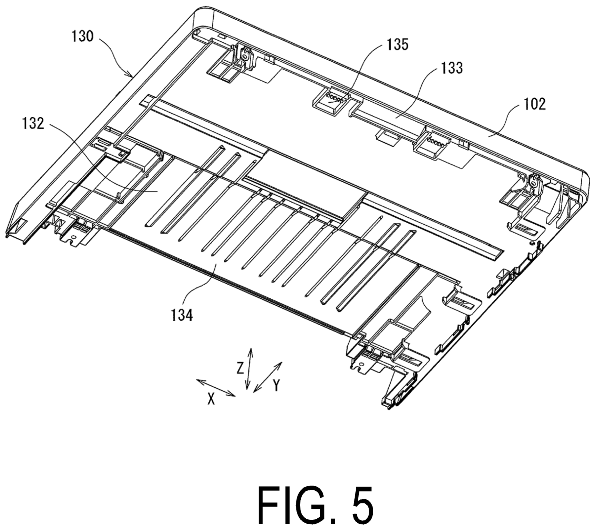

FIG. 5 is a perspective view of an external appearance illustrating the image reader as viewed from below.

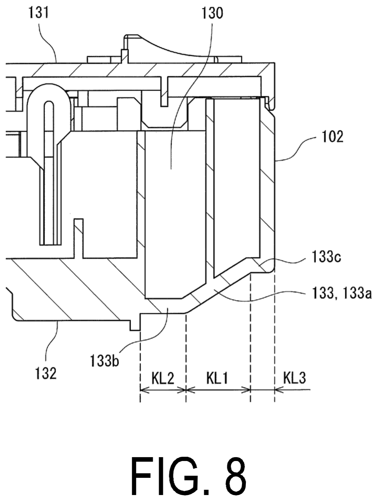

At the bottom (reader bottom 132) of the image reader 130, a rear side facing portion 133 is provided in a portion located at an upper edge of the rear side opening 102a on the apparatus rear 102 side, and a front side facing portion 134 is provided in a portion located at the upper edge of the front side opening 101a on the front side. The rear side facing portion 133 is provided near the center in the width direction X. In the present embodiment, the rear side facing portion 133 functions as a grip regulator. Note that a detailed structure of the rear side facing portion 133 will be described with reference to FIGS. 7 and 8 described later.

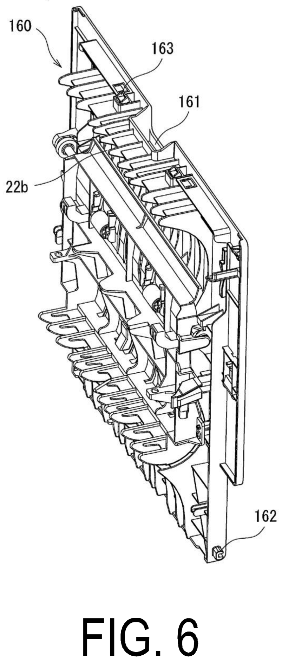

Note that a locking receiving portion 135 into which a locking claw 163 (see FIG. 6) of the openable and closable door 160 is inserted is provided on the rear side of the reader bottom 132. The locking receiving portion 135 includes a center recessed upward, and a side wall extending downward is provided to surround the center. A position where the locking receiving portion 135 is provided may be appropriately set according to a position of the locking claw 163, and in the present embodiment, the lock receiving portion 135 is provided at two positions with the rear side facing portion 133 interposed therebetween in the width direction X.

FIG. 6 is a perspective view of an external appearance of the openable and closable door 160.

The openable and closable door 160 is attached to the printing housing 120 via a support shaft 162 provided at a lower end portion, and is opened and closed by being rotated about the support shaft 162 as a fulcrum. The locking claw 163 is provided at the upper end portion of the openable and closable door 160, the upper end portion being the end portion on the image reader 130 side. In the present embodiment, the locking claw 163 is attached to the openable and closable door 160 via a biasing member, and is configured to vertically swing when pressed by another member (in the case of the disclosure, the bottom of the image reader 130). That is, in a state in which the openable and closable door 160 is closed, the locking claw 163 is inserted into the locking receiving portion 135 provided on the lower surface of the image reader 130, and the openable and closable door 160 is prevented from being spontaneously opened. When the openable and closable door 160 is opened, the locking claw 163 abuts on the bottom of the image reader 130 to swing downward, and is disengaged from the locking receiving portion 135, so that the locking is released.

FIG. 7 is an enlarged cross-sectional view illustrating the vicinity of the rear side facing portion 133 and the door handle 161. FIG. 8 is an enlarged cross-sectional view illustrating the vicinity of the rear side facing portion 133.

The door handle 161 of the openable and closable door 160 will be described in detail with reference to FIG. 7. FIG. 7 illustrates a state in which the openable and closable door 160 is closed. The door handle 161 is disposed so as to be located directly below the rear side facing portion 133. The door handle 161 includes a handle lower surface 161a extending inward with a gap provided in the height direction Z with respect to the reader bottom 132, an inner wall 161b extending upward from an end (left end in FIG. 7) of the inner side of the handle lower surface 161a, and an outer wall 161c extending upward from an end (right end in FIG. 7) of the outer side of the handle lower surface 161a. The upper end of the inner wall 161b extends to the vicinity of an inner horizontal portion 133b. The upper end of the outer wall 161c has a height such that a gap is formed between the upper end and an outer horizontal portion 133c.

As described above, since the space surrounded by the handle lower surface 161a, the inner wall 161b, and the outer wall 161c has a shape in which the bottom side of the image reader 130 is opened, the space 20 (rear side space 20b) is formed between the bottom of the image reader 130 and the openable and closable door 160 of the printing housing 120, in a state where the openable and closable door 160 is closed. Since the outer wall 161c is provided so that there is a gap between the outer wall 161c and the bottom of the image reader 130 in the height direction Z at the upper end portion, the outer wall 161c forms the rear side opening 102a which is the opening that opens into the space 20 (rear side space 20b) provided between the bottom of the image reader 130 and the printing housing 120 in a state where the openable and closable door 160 is closed.

Since the outer wall 161c has a shape extending upward from the handle lower surface 161a toward the bottom of the image reader 130, the openable and closable operation of the openable and closable door 160 can be easily performed by inserting fingers from the rear side opening 102a and gripping the inner surface of the outer wall 161c.

As described above, the openable and closable door 160 forms the space 20 (rear side space 20b) and the rear side opening 102a that opens into the space 20 (rear side space 20b), between the bottom of the image reader 130 and the openable and closable door 160 of the printing housing 120 in the closed state, and includes the door handle 161 in which the handle (outer wall 161c) for opening and closing the openable and closable door 160 is formed at the position of the rear side opening 102a facing the rear side facing portion 133 formed at the bottom of the image reader 130. Note that in the portion other than the door handle 161 of the openable and closable door 160, the upper end may extend to such an extent that no gap is formed between the openable and closable door 160 and the reader bottom 132 when the openable and closable door 160 is closed.

Next, the rear side facing portion 133 that functions as the grip regulator will be described.

As described above, the rear side facing portion 133, which is the grip inhibitor, is provided at the bottom of the image reader 130, in a portion facing the space 20 provided between the image reader 130 and the printing housing 120.

The rear side facing portion 133 includes an inclined portion (inclined surface 133a) inclined downward from the apparatus rear 102 side toward the inside, and horizontal portions (the inner horizontal portion 133b and the outer horizontal portion 133c) each connected to the inclined portion. In other words, the rear side facing portion 133 includes an inclined portion that is inclined downward from the side surface side of the printing housing 120 in which the rear side opening 102a is provided toward the inside of the rear side space 20b formed between the bottom of the image reader 130 and the printing housing 120, and a horizontal portion connected to the inclined portion.

Specifically, the reader bottom 132 is provided with the outer horizontal portion 133c, the inclined surface 133a, and the inner horizontal portion 133b in this order from an outer edge (right end in FIG. 7) connected to the rear (apparatus rear 102). The outer horizontal portion 133c and the inner horizontal portion 133b are parallel to the depth direction Y, and the outer horizontal portion 133c is located above the inner horizontal portion 133b. The inclined surface 133a extends so as to connect between the outer horizontal portion 133c and the inner horizontal portion 133b, and is inclined with respect to the depth direction Y. In the present embodiment, the angle at which the inclined surface 133a is inclined with respect to the depth direction Y is about 32 degrees.

As illustrated in FIG. 8, a length (first distance KL1) of the inclined surface 133a in the depth direction Y is longer than that of the horizontal portion. In the present embodiment, the first distance KL1 is 10 mm. A length (second distance KL2) of the inner horizontal portion 133b in the depth direction Y is 3.5 mm, and a length (third distance KL3) of the outer horizontal portion 133c in the depth direction Y is 2.5 mm. That is, the inclined surface 133a is configured such that the length in the direction from the rear side opening 102a side toward the inside of the rear side space 20b is longer than the length of the horizontal portion. As described above, a shape on which a hand is difficult to put can be obtained by combining the horizontal portion and the inclined portion and adjusting a range in which the inclined portion is provided to be wide.

In the present embodiment, even when there is a space into which a finger or the like can be inserted below the bottom of the image reader 130, since the grip inhibitor (the rear side facing portion 133) including the inclined portion (the inclined surface 133a) is provided, the finger abutting on the inclined portion is likely to slip, and it is difficult to hold the reader bottom 132 by putting the hand. Thus, when lifting the image forming apparatus 100 by putting a hand on the reader bottom 132, the weight of the entire image forming apparatus 100 is applied to the fingertips, and a very large force is required to lift the image forming apparatus 100. As a result, the user abandons inserting a hand into the space below the bottom of the image reader 130 to lift the image forming apparatus 100, and thus, the occurrence of distortion in the image reader 130 can be avoided.

As described above, by providing the openable and closable door 160, a structure can be obtained in which the inside of the apparatus is easily touched as necessary while protecting the inside of the apparatus. The grip inhibitor is provided, and thus a lower space is widened, and the door handle 161 provided therein is easily operated.

### Second Embodiment

Next, an image forming apparatus according to a second embodiment of the disclosure will be described with reference to the accompanying drawings. Note that since the second embodiment has a configuration substantially similar to that of the first embodiment illustrated in FIG. 1 to FIG. 8, description thereof will be omitted and only different points will be described.

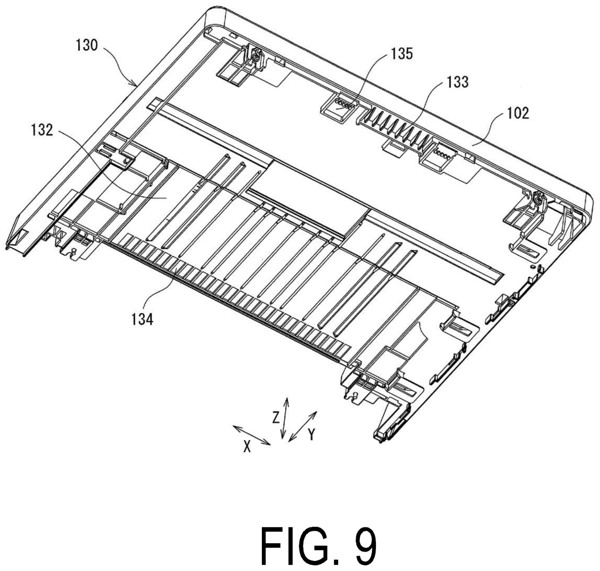

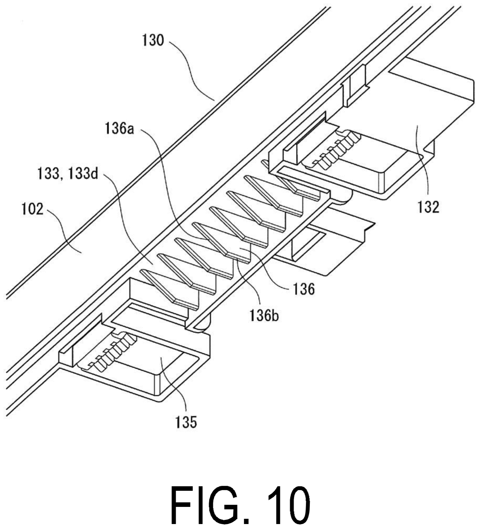

FIG. 9 is a perspective view of an external appearance illustrating an image reader in a second embodiment of the disclosure as viewed from below, and FIG. 10 is an enlarged perspective view illustrating the vicinity of the rear side facing portion.

The second embodiment differs from the first embodiment in terms of the structure of the rear side facing portion 133. The front side facing portion 134 is provided in the portion located at the upper edge of the front side opening 101a on the apparatus front 101 side of the bottom (reader bottom 132) of the image reader 130, and both the front side facing portion 134 and the rear side facing portion 133 have a configuration in which a plurality of ribs 136 are arranged side by side (see FIG. 9).

In particular, as illustrated in FIG. 10, the rear side facing portion 133 is provided with a rib installation surface 133d located slightly above the reader bottom 132, and the plurality of ribs 136 extending downward from the rib installation surface 133d are formed. The rib 136 includes a rib inclined portion 136a inclined downward from the rear side toward the inside, and a rib horizontal portion 136b connected to the rib inclined portion 136a. In a portion passing through the ribs 136, the rib installation surface 133d, the rib inclined portions 136a, and the rib horizontal portions 136b are provided in this order from the outer edge connected to the apparatus rear 102. That is, when the second embodiment is compared with the first embodiment, the rib installation surface 133d corresponds to the outer horizontal portion 133c, the rib inclined portion 136a corresponds to the inclined surface 133a, and the rib horizontal portion 136b corresponds to the inner horizontal portion 133b. As described above, in the configuration in which the plurality of ribs 136 are provided as the grip inhibitor, when lifting the image reader 130 by putting a hand on the ribs 136 arranged side by side at a short interval, a load is applied to the fingers, which causes a sense of discomfort, and thus the user's grip can be inhibited. Note that it is desirable that an installation interval of the plurality of ribs 136 is about the width of a human finger, and the width of the rib 136 itself in the direction in which the plurality of ribs 136 are arranged is narrower than the width of the human finger. Specifically, the installation interval is preferably from about 10 mm to about 20 mm, and the width of the rib itself is preferably from about 1 mm to about 3 mm. This configuration causes the ribs to dig into the user's fingertips, thereby more effectively inhibiting the user's grip.

Although detailed description is omitted, the front side facing portion 134 can inhibit the user's grip by appropriately providing the plurality of ribs 136 similar to those of the rear side facing portion 133.

Note that the embodiments disclosed herein are illustrative in all respects and do not form the basis for a limited interpretation. Accordingly, the technical scope of the present disclosure is not to be construed only by the foregoing embodiments and is defined based on the description of the claims. In addition, meanings equivalent to the claims and all changes made within the claims are included.

## Claims

1. An image forming apparatus, comprising
a first housing and a second housing integrally connected to each other in a vertical direction with the second housing located below the first housing, wherein
an opening that opens into a space provided between a bottom of the first housing and the second housing is provided in a side of the second housing,
at the bottom of the first housing, a grip inhibitor is provided in a portion facing the space,
the grip inhibitor includes
an inclined portion that is inclined downward from a side surface side of the second housing in which the opening is provided toward an inside of the space and
a horizontal portion connected to the inclined portion.

2. The image forming apparatus according to claim 1, wherein
the second housing includes an openable and closable door openably and closably attached to the second housing, and
the openable and closable door forms the space and the opening that opens into the space in a closed state and includes a door handle in which a handle that opens and closes the openable and closable door is formed at a position of the opening facing the grip inhibitor.

3. The image forming apparatus according to claim 1, wherein
a length of the inclined portion in a direction from the opening side toward the inside of the space is longer than a length of the horizontal portion.

4. The image forming apparatus according to claim 1, wherein
the grip inhibitor includes a plurality of ribs arranged side by side.

5. The image forming apparatus according to claim 1, wherein
the first housing includes an image scanner that reads an image from a document, and
the second housing includes an image former that forms an image on a sheet.

6. The image forming apparatus according to claim 1, wherein
the second housing includes an image former that forms an image on a sheet, a discharge tray on which the sheet discharged from the second housing after the image is formed thereon by the image former is stacked is provided in the space, and
the grip inhibitor is provided on the opening side of a portion of the bottom of the first housing facing the space.

7. The image forming apparatus according to claim 6, wherein
the grip inhibitor includes a plurality of ribs arranged side by side.

8. The image forming apparatus according to claim 6, wherein
the first housing includes an image scanner that reads an image from a document.

9. The image forming apparatus according to claim 1 or 6, wherein
the second housing is provided with an apparatus gripper to be gripped by a user.
